(19) Europäisches Patentamt / European Patent Office / Office européen des brevets

(11) **EP 4 169 389 A1**

(12) **EUROPEAN PATENT APPLICATION**
published in accordance with Art. 153(4) EPC

(43) Date of publication:
**26.04.2023 Bulletin 2023/17**

(21) Application number: **21824957.1**

(22) Date of filing: **18.06.2021**

(51) International Patent Classification (IPC):
*A23L 7/10* (2016.01)        *A23L 2/38* (2021.01)

(52) Cooperative Patent Classification (CPC):
**A23L 2/38; A23L 7/10**

(86) International application number:
**PCT/JP2021/023170**

(87) International publication number:
**WO 2021/256557 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2020 JP 2020106002**

(71) Applicant: **Suntory Holdings Limited
Osaka 530-8203 (JP)**

(72) Inventors:
• **SUZUKI, Tomonori
  Kawasaki-shi, Kanagawa 211-0067 (JP)**
• **UEMOTO, Sohei
  Kawasaki-shi, Kanagawa 211-0067 (JP)**

(74) Representative: **Vossius & Partner
Patentanwälte Rechtsanwälte mbB
Siebertstraße 3
81675 München (DE)**

(54) **WHEAT ROASTING PROFILE**

(57)     An object of the present invention is to provide a novel method for roasting barley. The present invention provides a method for roasting barley, including a step of roasting barley, wherein in the roasting step, the barley is roasted such that a lightness change rate expressed by formula 1 is less than -0.04.
[Formula 1]

$$\text{Lightness change rate} = \frac{L_{T2} - L_{T1}}{T2 - T1} \quad \cdots \text{Formula 1}$$

wherein T1 and T2: time (seconds) after starting roasting, provided that T2>T1≥0;
$L_{T1}$: a lightness ratio of the barley at T1 (lightness of the barley at T1/lightness of the barley before roasting); and
$L_{T2}$: a lightness ratio of the barley at T2 (lightness of the barley at T2/lightness of the barley before roasting).

Fig. 1

**Description**

TECHNICAL FIELD

The present invention relates to a profile (phase control) of roasting barley, a method for roasting barley, and roasted barley obtained by the method.

BACKGROUND ART

Barley tea is one of the beverages that are widely familiar with people. There are a large number of types of barley tea distributed in the market, and their flavors are various. Roasted barley is the main raw material for barley tea. The conditions for roasting barley determine the characteristics or quality of roasted barley and therefore give an influence on the characteristics or quality of barley tea. Conventionally, attempts have been made to devise the conditions for roasting barley.

PTL 1 discloses a technique in which: barley is charged in a roaster set to a temperature of 200°C to 300°C such that the temperature after charging the barley into the roaster is 100°C to 160°C; a pre-roasting treatment of increasing the temperature of the roaster from 100°C - 160°C to 230°C - 280°C in 3 to 20 minutes is performed such that the swelling rate of the barley does not become 25% or more and water content falls within 4% or less; and thereafter a roasting treatment is performed at 230°C to 280°C for 3 to 20 minutes.

CITATION LIST

PATENT LITERATURE

PTL 1: Japanese Patent Laid-Open No. H6-46808

SUMMARY OF INVENTION

TECHNICAL PROBLEM

In the technique of PTL 1, a plurality of types of roasted barley each having a different purpose, that is, roasted barley for coloring and roasted barley for imparting an aroma are produced separately, and the two are mixed to produce a roasted barley product for barley tea having a preferred color and aroma. A plurality of types of roasted barley needs to be separately produced, and therefore production costs and time are significant. An object of the present invention is to provide a novel method for roasting barley.

SOLUTION TO PROBLEM

The present inventors have conducted studies taking notice of the relevance between the various conditions with regard to the roasting of barley and the flavor of barley tea. As a result, the present inventors have found that a lightness change rate of barley in the roasting of the barley have a relationship with the flavor of roasted barley. The present inventors have completed the present invention based on the knowledge.

The present invention provides the following. However, the present invention is not limited to the following.

(1) A method for roasting barley, comprising a step of roasting barley, wherein in the roasting step, the barley is roasted such that a lightness change rate expressed by formula 1 is less than -0.04:

[Formula 1]

$$\text{Lightness change rate} = \frac{L_{T2} - L_{T1}}{T2 - T1} \quad \cdots \text{Formula 1}$$

wherein T1 and T2: time (seconds) after starting roasting, provided that T2>T1≥0;
$L_{T1}$: a lightness ratio of the barley at T1 (lightness of the barley at T1/lightness of the barley before roasting); and
$L_{T2}$: a lightness ratio of the barley at T2 (lightness of the barley at T2/lightness of the barley before roasting).

(2) The method for roasting barley according to (1), wherein the lightness change rate is - 0.12 or more and less than -0.04.

(3) The method for roasting barley according to (1) or (2), wherein the roasting step further comprises roasting the barley such that the lightness change rate is -0.04 or more.

(4) The method for roasting barley according to any one of (1) to (3), comprising a step of impregnating the barley with water before the roasting step.

(5) Roasted barley obtained by the method for roasting barley according to any one of (1) to (4).

(6) A method for producing an extract of roasted barley, comprising subjecting the roasted barley according to (5) to extraction with a solvent.

(7) An extract of roasted barley obtained by the production method according to (6).

(8) A product comprising the extract of roasted barley according to (7).

BRIEF DESCRIPTION OF DRAWING

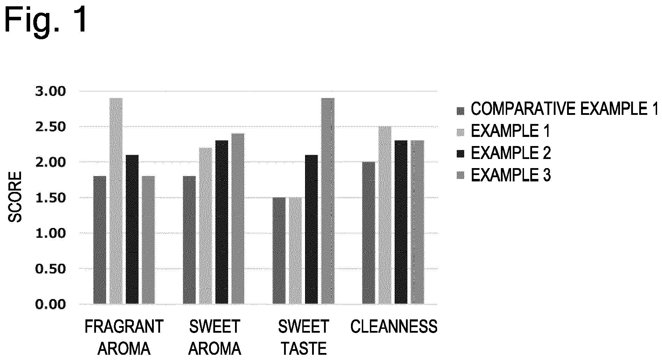

[Fig. 1] Fig. 1 shows results of sensory evaluations on extract solutions of roasted barley.

DESCRIPTION OF EMBODIMENTS

<Method for Roasting Barley>

A method for roasting barley is provided by the present invention. The roasting method includes a step of roasting barley. The barley to be provided for the roasting step may be any kind of barley. The barley as referred to herein is a general term of Poaceae grain, and examples thereof include, but are not limited to, wheat, barley, rye, oat, adlay, and the like. In the present invention, the grain is preferably barley. With regard to the barley, the variety, production area, storage period, grade, and the like are not particularly limited. In addition, the procurement means for the barley is also not particularly limited. A person skilled in the art can appropriately select these. Further, the amount of the barley to be roasted can appropriately be set according to the scale of production, the necessary amount of products (roasted barley), and the like.

The roasting of the barley may be performed by any means, and known means can be used. It is preferable to use a roaster because the roasting temperature is easily controlled. The roaster may be one commercially available, or may be one individually designed so that it can be applicable to a specific embodiment of use.

A roasting chamber may be preheated before starting the step of roasting the barley. The "roasting chamber" as used herein means a place or space where the roasting of the barley is performed. For example, when a roaster is used, the roasting chamber means the internal space of the roaster where the roasting of the barley is performed.

In the step of roasting the barley, the temperature at the start can arbitrarily be set. A person skilled in the art can appropriately set the temperature at the start of the roasting without the need for explanation. As an example, the roasting can be started by setting the roasting temperature to 100°C to 300°C, although not limited thereto. The roasting temperature can be measured by known means, such as a thermometer or a temperature sensor.

In the roasting step, the roasting of the barley is performed using a rate of change in the lightness of the barley (also referred to as "lightness change rate") as an index. Here, the lightness change rate is an amount of change in the lightness ratio of the barley per unit time in the roasting step. That is, the lightness change rate can be expressed by formula 1 bellow:

[Formula 2]

$$\text{Lightness change rate} = \frac{L_{T2} - L_{T1}}{T2 - T1} \qquad \cdots \text{ Formula 1}$$

T1 and T2: time (seconds) after starting roasting, provided that $T2 > T1 \geq 0$

$L_{T1}$: lightness ratio of barley at T1 (lightness of barley at time T1/lightness of barley before roasting)

$L_{T2}$: lightness ratio of barley at T2 (lightness of barley at time T2/lightness of barley before roasting)

In the present invention, the roasting step is performed such that the lightness change rate of the barley is less than -0.04. The lower limit value of the lightness change rate does not have to be particularly set, but can be set to -0.12 or more. That is, the roasting step can be performed such that the lightness change rate of the barley is -0.12 or more and less than -0.04.

Then, the roasting step can further include roasting the barley such that the lightness change rate is -0.04 or more. Such roasting may be performed before the roasting in the above-described lightness change rate, may be performed after the roasting in the above-described lightness change rate, or may be performed both before and after the roasting in the above-described lightness change rate.

Here, the "lightness ratio" of the barley in formula 1 is a ratio of the lightness of the barley at a certain point in time ($T_n$ (for example, T1, T2)) after starting the roasting to the lightness of the barley before starting the roasting (that is, at a roasting time of 0 seconds (T0)). Here, the "lightness" is an extent of the roasting of the barley expressed by the brightness of color. In more detail, the lightness of the barley becomes lower as the extent of the roasting becomes higher. The lightness of the barley can be represented by a colorlette value, an L value, and the like, although not limited thereto. The lightness ratio can be expressed by formula 2 below.

[Formula 3]

$$\text{Lightness ratio} = \frac{L_{Tn}}{L_{T0}} \qquad \cdots (\text{Formula 2})$$

T0: before starting roasting (0 seconds)
Tn: arbitrary time (seconds) after starting roasting, provided that Tn>0
$L_{T0}$: lightness of barley at T0
$L_{Tn}$: lightness of barley at arbitrary time

Hereinafter, description will be given taking a case where the L value is used as the lightness as an example. A person skilled in the art understands that the present invention is feasible even if the following description is replaced by another embodiment of the lightness (such as colorlette). The L value of the barley represents the extent of roasting of the barley (also referred to as degree of roasting) as a color, and the L value of white is defined as 100 and the L value of black is defined as 0. That is, a smaller L value means that the roasting of the barley has progressed more and the degree of roasting is higher. Then, it can also be understood that the L value ($L_{Tn}$) of the barley at a certain point in time ($T_n$ (for example, T1, T2)) after starting the roasting is equal to or lower than the L value ($L_{T0}$) of the barley before starting the roasting (T0). However, at an early stage of the roasting, the $L_{Tn}$ value may become higher than the $L_{T0}$ value in some cases, although only slightly higher than the $L_{T0}$ value. It is presumed that this is because the water in the barley evaporates at an early stage of the roasting and tone of color may become light in some cases. The L value ($L_{T0}$) of the barley before starting roasting is generally, but not limited to, about 70 to about 90. The L value of the barley can be measured with a color-difference meter. Generally, the barley is crushed and the L value of the crushed barley is measured. However, when a particular measurement method is shown in instructions for use or the like of a device, the L value may be measured according to the measurement method. A known crusher or grinder can be used in crush. In the present specification, the L value is measured by the method unless otherwise noticed. To measure the lightness ratio (L value ratio ($L_{Tn}/L_{T0}$)) in the roasting step, the barley is sampled at an arbitrary time (for example, T 1, T2) after starting the roasting and the L value of the barley is measured, and thereby the lightness ratio (L value ratio) to the L value of the barley which has been measured before starting the roasting (T0) can be calculated.

The method of the present invention can, arbitrarily, further include a step of impregnating the barley with water before the roasting step. By the step, water can be contained in the barley (unroasted). The amount of water which is used for impregnating the barley can be set to, for example, 0.3 L to 1 L, preferably 0.5 L to 0.8 L, per kg of the barley, although not limited thereto. This step can be performed at normal temperature, and is performed in a range of, for example, 15°C to 45°C. When barley tea is produced using roasted barley obtained by the method of the present invention in which this step is performed, the sweet taste (not as a aroma but as a taste) of the barley tea can be enhanced.

Besides, the method of the present invention may further include a known step in the related art in addition to the above-described steps. For example, a step of stopping the roasting of the barley can be performed. The step is known as a cooling step. By the cooling step, the temperature of the barley is lowered, making it possible for the roasting not to progress. Means for lowering the temperature of the roasted barley is not particularly limited. The means can be performed by, for example, bringing the roasted barley into contact with water, air, a combination thereof, or the like. By the cooling step, the temperature of the roasted barley can be lowered to, for example, 60°C or less or 50°C or less, and finally cooled to room temperature.

The barley which is obtained by the above-described production method and which has been roasted (also referred to as "roasted barley") is also one aspect of the present invention. The roasted barley may have an L value of 20 to 50, preferably 30 to 40, although not limited thereto. Then, the roasted barley can have at least one of the characteristics as follows.

According to the present invention described above, roasted barley suitable for producing barley tea having a good flavor can be obtained more simply without performing a complicated operation such as mixing a plurality of types of roasted barley having a different degree of roasting. That is, the roasted barley is a single type of roasted barley, but makes it possible to produce barley tea having a aroma and cleanness (a taste without the feeling of off-flavor) the characteristics of which are different from those of conventional products.

Evaluations of the aroma and cleanness can be evaluated by comparing roasted barley as a reference and the roasted barley of the present invention. The evaluations can be performed by the senses. Details on the evaluation methods will be described in Examples below.

<Method for Producing Extract of Roasted Barley, Product Containing the Extract, and the Like>

The present invention provides a method for producing a product derived from roasted barley. The production method includes a step of subjecting the above-described roasted barley of the present invention to extraction with a solvent. Here, a step of crushing the roasted barley may be performed before the extraction step. Examples of the solvent which is used for the extraction include water, a buffer solution (such as a phosphate buffer solution and a citrate buffer solution) and an organic solvent (such as an alcohol). A preferred solvent is, but not limited to, water. Then, the production method may further include a known step in addition to the extraction step. For example, at least one step selected from the group consisting of diluting, concentrating, drying, molding, mixing, and adjusting pH of the extract solution, adding another component, and the like can be performed following the extraction step. A person skilled in the art can appropriately adopt these known steps according to the final form which the extract should take, the specifications, or the like.

The extract obtained above is also one aspect of the present invention. The extract may take any form of liquid, solid, semisolid, and the like. Examples of the liquid extract include, but are not limited to, a solvent extract solution, and a diluted solution or concentrated solution of the extract solution. A preferred embodiment is an aqueous extract solution, preferably barley tea. Examples of the solid extract include a frozen product, a powder, a granule, a capsule, and a tablet. Examples of the semisolid extract include a paste and a gel.

The present invention further provides a product containing the above-described extract. The product can contain other components. Examples of other components include, but are not limited to, a pH adjusting agent, a sweetener, an acidulant, a preservative, and an emulsifier. In addition, the product can be filled in a container. Examples of the container include, but are not limited to, a can (made of steel, aluminum, or the like), a bottle (made of plastic, glass, or the like), and a pack (such as paper).

It can be understood that the extract or product of the present invention can achieve an improvement in flavor which is similar to the improvement in flavor described in relation to the above-described roasted barley.

EXAMPLES

Hereinafter, the invention will be described in more detail showing Examples. However, the present Examples are provided for the purpose of understanding the invention and do not intend to limit the scope of the invention.

<1. Roasting Barley>

Preliminary operation was performed until the temperature of a hot air drum type roaster (manufactured by NEUHAUS NEOTEC Maschinen- und Anlagenbau GmbH) reached 130°C. In addition, the L value of barley before roasting was measured. After the temperature of the roasting chamber reached 130°C, 550 g of the barley was charged into the roaster to start a step of roasting the barley. The hot air was regulated such that the lightness change rate of the roasted barley became as follows.

Example 1: The barley was roasted for 3 minutes such that the lightness change rate in which the lightness at 0 minutes (immediately after starting the roasting) was defined as reference became -0.12.

Example 2: The barley was roasted for 7 minutes such that the lightness change rate in which the lightness at 0 minutes (immediately after starting the roasting) was defined as reference became -0.03, and then the barley was further roasted for 3 minutes such that the lightness change rate became -0.06.

Example 3: 1 kg of raw barley was immersed in 800 g of water at normal temperature for 1 hour before the roasting, and then the barley was roasted under the same conditions as in Example 1.

Comparative Example 1: The barley was roasted for 10 minutes such that the lightness change rate in which the lightness at 0 minutes (immediately after starting the roasting) was defined as reference became -0.04.

The following tests were performed using the roasted barley thus obtained.

<2. Crushing Barley>

After the roasted barley was crushed with a crusher (Corn Type Coffee Grinder KG364J/crushed particle size distribution setting: Extra Fine/manufactured by De'Longhi S.p.A.), the L value of the barley was measured with a lightness measuring machine (Colorette 4/manufactured by PROBAT AG).

<3. Sensory Evaluation>

To 5 g of the roasted barley (uncrushed) obtained above, 200 mL of 100°C water was poured to perform extraction for 5 minutes. After the extraction, the barley was removed from the liquid to obtain a sensory evaluation sample.
Six trained professional panelists reconciled the evaluation criteria and then evaluated each of the indexes described below on a three-point scale. An average was calculated for the rating given by the respective panelists and adopted as the sensory evaluation result.

• Three-point scale

> 1: Not felt
> 2: Felt
> 3: Strongly felt

• Sensory evaluation items

> Fragrant aroma: Having a fragrant aroma
> Sweet aroma: Having a sweet aroma
> Sweet taste: Having sweetness felt by a tongue
> Cleanness: Having a taste without the feeling of off-flavor

As described above, it was able to be ascertained that the aromas, particularly the fragrant aroma, were enhanced more and the cleanness was improved more in Example 1 (the roasted barley roasted for 3 minutes such that the lightness change rate became -0.12) than in Comparative Example 1 (the roasted barley roasted for 10 minutes such that the lightness change rate became -0.04).
It was ascertained that the aromas and the cleanness were improved more and the sweetness was enhanced more in Example 2 (the roasted barley roasted for 7 minutes such that the lightness change rate became -0.03 and then further roasted for 3 minutes such that the lightness change rate became -0.06) than in Comparative Example 1.
In addition, it was able to be ascertained that the sweetness was enhanced more in Example 3 (the roasted barley obtained by being immersed in water and then roasted under the same conditions as in Example 1 described above) than in Example 1 where the immersion step was not performed.

**Claims**

1. A method for roasting barley, comprising a step of roasting barley, wherein

   in the roasting step, the barley is roasted such that a lightness change rate expressed by formula 1 is less than -0.04:
   [Formula 1]

$$\text{Lightness change rate} = \frac{L_{T2} - L_{T1}}{T2 - T1} \qquad \cdots \text{ Formula 1}$$

   wherein T1 and T2: time (seconds) after starting roasting, provided that T2>T1≥0;
   $L_{T1}$: a lightness ratio of the barley at T1 (lightness of the barley at T1/lightness of the barley before roasting); and
   $L_{T2}$: a lightness ratio of the barley at T2 (lightness of the barley at T2/lightness of the barley before roasting).

2. The method for roasting barley according to claim 1, wherein the lightness change rate is -0.12 or more and less than -0.04.

3. The method for roasting barley according to claim 1 or 2, wherein the roasting step further comprises roasting the barley such that the lightness change rate is -0.04 or more.

4. The method for roasting barley according to any one of claims 1 to 3, comprising a step of impregnating the barley with water before the roasting step.

5. Roasted barley obtained by the method for roasting barley according to any one of claims 1 to 4.

6. A method for producing an extract of roasted barley, comprising subjecting the roasted barley according to claim 5 to extraction with a solvent.

7. An extract of roasted barley obtained by the production method according to claim 6.

8. A product comprising the extract of roasted barley according to claim 7.

# Fig. 1

## INTERNATIONAL SEARCH REPORT

| International application No. |
| --- |
| PCT/JP2021/023170 |

**A.   CLASSIFICATION OF SUBJECT MATTER**
A23L 7/10(2016.01)i; A23L 2/38(2021.01)i
FI: A23L2/38 L; A23L2/38 M; A23L7/10 H

According to International Patent Classification (IPC) or to both national classification and IPC

**B.   FIELDS SEARCHED**

Minimum documentation searched (classification system followed by classification symbols)
A23L7/10; A23L2/38

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII);
FSTA/CAplus/AGRICOLA/BIOSIS/MEDLINE/EMBASE (STN); Google

**C.   DOCUMENTS CONSIDERED TO BE RELEVANT**

| Category* | Citation of document, with indication, where appropriate, of the relevant passages | Relevant to claim No. |
| --- | --- | --- |
| X | JP 2012-170371 A (ITO EN, LIMITED) 10 September 2012 (2012-09-10) paragraphs [0039], [0042] | 1–8 |
| X | JP 59-45858 A (HOUSE FOOD INDUSTRIAL COMPANY LIMITED) 14 March 1984 (1984-03-14) example 1, control example 2, table-1 | 1–8 |
| X | 麦茶が出来上がりました!, 18 July 2019, pp. 1-2, retrieved on 27 August 2021, URL: http://yokotanojo.com/?p=8068, text, picture, non-official translation ("Barley tea is ready!") | 1–8 |

☐   Further documents are listed in the continuation of Box C.      ☒   See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 27 August 2021 (27.08.2021) | 07 September 2021 (07.09.2021) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2021/023170 |

| Patent Documents referred in the Report | Publication Date | Patent Family | Publication Date |
|---|---|---|---|
| JP 2012-170371 A | 10 Sep. 2012 | (Family: none) | |
| JP 59-45858 A | 14 Mar. 1984 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H646808 A